## Europäisches Patentamt
## European Patent Office
## Office européen des brevets

(19)

(11) Numéro de publication : **0 127 498**
**B1**

(12)

# FASCICULE DE BREVET EUROPÉEN

(45) Date de publication du fascicule du brevet : 21.01.87

(51) Int. Cl.⁴ : **G 21 D 3/16, G 21 C 7/08**

(21) Numéro de dépôt : 84400812.8

(22) Date de dépôt : 20.04.84

(54) Procédé de réglage automatique de la teneur en bore soluble de l'eau de refroidissement d'un réacteur nucléaire à eau sous pression.

(30) Priorité : 21.04.83 FR 8306545

(43) Date de publication de la demande : 05.12.84 Bulletin 84/49

(45) Mention de la délivrance du brevet : 21.01.87 Bulletin 87/04

(84) Etats contractants désignés : BE DE GB SE

(56) Documents cités :
DE-A- 1 948 913
FR-A- 2 238 992
FR-A- 2 283 515
FR-A- 2 395 572

(73) Titulaire : FRAMATOME ET CIE.
Tour Fiat 1, Place de la Coupole
F-92400 Courbevoie (FR)

(72) Inventeur : Cohen, Yvan
181 boulevard Pasteur Escalier C4
F-94360 Brie-sur-Marne (FR)
Inventeur : Deroubaix, Pierre
5 Boulevard de Charonne
F-75011 Paris (FR)

(74) Mandataire : Lavoix, Jean et al
c/o Cabinet Lavoix 2, Place D'Estienne D'Orves
F-75441 Paris Cedex 09 (FR)

Jouve, 18, rue St-Denis, 75001 Paris, France

## Description

L'invention concerne un procédé de réglage automatique de la teneur en bore soluble de l'eau de refroidissement d'un réacteur nucléaire à eau sous pression.

Les réacteurs nucléaires à eau sous pression comportent un cœur constitué par des assemblages disposés verticalement et côte à côte dans une cuve renfermant de l'eau sous pression assurant le refroidissement du cœur et le transport de la chaleur de ce cœur vers les générateurs de vapeur. La vapeur fournie par les générateurs de vapeur permet d'entraîner une turbine qui assure elle-même l'entraînement d'un turbo-alternateur produisant du courant électrique.

En fonction des besoins du réseau électrique et de la façon dont la centrale est couplée à d'autres centrales nucléaires, il est nécessaire d'assurer la conduite du réacteur nucléaire pour obtenir à chaque instant de ce réacteur une puissance correspondant à la puissance demandée.

La conduite du réacteur est généralement assurée par le déplacement dans la direction verticale, à l'intérieur du cœur, de barres de commande absorbant les neutrons. Dans les modes de conduite les plus fréquents d'un réacteur nucléaire à eau sous pression, le déplacement d'un groupe de régulation constitué de barres très absorbantes est commandé de façon automatique en utilisant comme paramètre de réglage l'écart entre la température moyenne réelle du cœur et une température de référence qui est une fonction linéaire de la puissance que doit fournir le réacteur nucléaire à la turbine. Cependant, dans tous les modes de conduite d'un réacteur nucléaire à eau sous pression, il est nécessaire de disposer d'un moyen de conduite supplémentaire du réacteur nucléaire. Ce moyen supplémentaire est constitué par un système de borication et de dilution de l'eau de refroidissement du réacteur, c'est-à-dire un ensemble de moyens permettant de faire varier la teneur en bore soluble de l'eau de refroidissement du réacteur nucléaire qui peut être introduit sous forme d'acide borique ou au contraire dilué par introduction d'eau pure. L'augmentation de la concentration en bore soluble permet en effet d'augmenter l'absorption des neutrons par le fluide de refroidissement et donc de diminuer la puissance du réacteur. La dilution a évidemment un effet contraire.

Le système de borication et de dilution de l'eau de refroidissement du réacteur permet de compléter l'action des groupes de barres de commande et en particulier de corriger les effets à long terme dus aux variations de réactivité du réacteur. Ces effets à long terme accompagnant les variations de réactivité du réacteur comprennent en particulier la formation et la disparition de xénon par réaction nucléaire dans le cœur du réacteur. L'apparition et la transformation du xénon ont elles-mêmes des effets importants sur la réactivité et sur la répartition axiale de puissance dans le cœur du réacteur.

La répartition axiale de puissance dans le cœur du réacteur, c'est-à-dire la répartition de puissance dans la direction verticale, n'est en effet ni homogène ni constante pour différentes raisons dont les principales sont que les barres de commande utilisées pour la conduite du réacteur sont généralement insérées sur une partie de la hauteur du cœur seulement, que cette insertion est variable au cours du temps et que la densité de l'eau de refroidissement et la concentration du xénon dans le cœur du réacteur ne sont pas constantes suivant sa hauteur.

Un des buts recherchés lors de la conduite du réacteur est d'éviter que la distribution de puissance dans le cœur ne soit par trop déséquilibrée entre la partie supérieure et la partie inférieure du cœur.

On dispose généralement, pour contrôler la répartition axiale de puissance dans le cœur, de moyens de mesure du flux neutronique à différentes hauteurs dans le cœur et de moyens pour calculer un paramètre représentatif du déséquilibre de puissance dans le cœur, appelé « déséquilibre axial de puissance $\Delta I$ » et défini de la façon suivante :

$$\Delta I = P_H - P_B$$

où $P_H$ est la puissance dans la moitié haute du cœur, $P_B$ la puissance dans la moitié basse du cœur et $\Delta I$ le déséquilibre axial de puissance exprimé en % de la puissance nominale.

Plus exactement, on détermine l'écart de la valeur du déséquilibre axial mesuré par rapport à un déséquilibre axial de puissance de référence $\Delta I$ réf qui correspond à la valeur du $\Delta I$ mesuré à 100 % de la puissance du réacteur, les barres de commande étant quasiment extraites et le xénon étant à l'équilibre dans tout le cœur du réacteur.

En plus de la régulation de puissance par les barres de commande comportant en particulier le déplacement d'un groupe de régulation en fonction de l'écart de la température du cœur par rapport à une température de référence, on est amené à opérer un réglage manuel de la teneur en bore de l'eau de refroidissement pour pouvoir respecter les consignes de positionnement des barres de commande en fonction du niveau de puissance du réacteur. Ces consignes de positionnement sont établies de façon à maintenir l'écart du déséquilibre de puissance par rapport au déséquilibre de référence dans une zone de faible amplitude entourant la valeur zéro.

Les moyens de borication et les moyens de dilution sont commandés manuellement par un opérateur. Ce mode de conduite, partiellement manuel, peut être considéré comme relativement satisfaisant dans le cas où la centrale est utilisée à un niveau de puissance constant ou avec des variations très lentes des niveaux de puissance.

Lors d'un fonctionnement de la centrale en suivi de charge où les variations de puissance sont plus nombreuses et plus rapides, les actions de borication ou de dilution nécessaires sont plus fréquentes. Il peut alors être très utile de disposer d'un moyen de commande automatique des actions de borication et de dilution.

Dans le brevet américain US-A-3 578 562, on dérive en continu une partie de l'eau de refroidissement primaire dans un ensemble de mesure permettant la détermination de la concentration en bore instantanée de cette eau primaire. On ajuste automatiquement la concentration en bore, grâce à un régulateur, en fonction de la puissance demandée au réacteur, des limites de concentration en bore admises et de la position des barres de commande dans le cœur du réacteur.

Un tel système de réglage automatique est cependant complexe puisqu'il nécessite la détermination en continu de la concentration en bore du fluide de refroidissement et l'établissement d'une corrélation entre la valeur de la concentration souhaitable et la valeur de différents paramètres de conduite du réacteur.

Dans le brevet français FR-A-2 392 472, on décrit un système de borication et de dilution automatique fondé sur la comparaison entre la température moyenne du cœur et la température de référence représentative de la puissance demandée par la turbine au réacteur nucléaire.

Dans le cas d'un mode de conduite d'un réacteur tel que décrit dans le brevet français n° FR-A-2 395 572 de la Société FRAMATOME, des méthodes de réglage automatique de la teneur en bore telles que décrites ci-dessus ne seraient pas applicables.

Dans le procédé de conduite décrit dans le brevet français FR-A-2 395 572, on déplace des groupes de barres de commande allégées en anti-réactivité, à l'intérieur du cœur, en fonction de la puissance demandée à la turbine uniquement. Un groupe de barres de commande très absorbantes différent des groupes de régulation de la puissance est déplacé en fonction de l'écart entre la température moyenne du cœur et la température de référence. Ce groupe de régulation de température est déplacé de façon totalement indépendante des groupes de régulation de puissance, entre des bornes de réglage définies par le mode de fonctionnement du réacteur et l'état d'évolution du cœur de réacteur. Pour maintenir le groupe de régulation entre ces bornes de réglage, on fait varier la concentration en bore du fluide primaire, soit manuellement, soit automatiquement, lorsque le groupe de régulation se déplace pour atteindre une des bornes de réglage.

Il n'y a donc pas de réglage automatique de la teneur en bore soluble de l'eau de refroidissement tant que le groupe de régulation ne se déplace pas de façon à atteindre ou dépasser ces limites de réglage.

D'autre part, la distribution axiale de puissance qui est perturbée de façon moins importante que dans d'autres modes de pilotage par les groupes de réglage de la puissance, n'est pas contrôlée de façon automatique.

Le but de l'invention est donc de proposer un procédé de réglage automatique de la teneur en bore soluble de l'eau de refroidissement d'un réacteur nucléaire à eau sous pression dont la conduite est assurée par le déplacement dans la direction verticale de barres de commande absorbant les neutrons dans le cœur du réacteur constitué par des assemblages disposés verticalement et côte à côte et par le réglage de la teneur en bore soluble de l'eau sous pression grâce à des moyens de borication et à des moyens de dilution de cette eau, les barres de commande comportant au moins un groupe de régulation constitué par des barres fortement absorbantes qui sont déplacées automatiquement en fonction de l'écart entre la température moyenne du cœur et une température de référence fonction de la puissance que doit fournir le réacteur et des moyens étant associés au réacteur pour la détermination du déséquilibre axial de puissance dans le cœur et de l'écart de ce déséquilibre axial par rapport à un déséquilibre de référence correspondant à l'insertion minimum des barres de commande dans le cœur et à l'équilibre de la concentration en xénon dans ce cœur, ce procédé de réglage pouvant agir de façon sûre suivant un principe simple, pour assister le groupe de régulation et permettre le maintien d'une distribution de puissance suffisamment homogène dans le cœur quel que soit le programme de puissance demandé au réacteur.

Dans ce but :

on définit *a priori* des domaines de fonctionnement des moyens de borication et des moyens de dilution respectivement, correspondant à des couples de valeurs de deux paramètres de réglage, à savoir un paramètre caractéristique de la position du groupe de régulation dans le cœur et l'écart du déséquilibre axial de puissance par rapport au déséquilibre de référence, en tenant compte des conditions d'exploitation du réacteur et des normes de sécurité,

et que, de façon continue, pendant le fonctionnement du réacteur :

on détermine la valeur instantanée de l'écart du déséquilibre axial de puissance par rapport au déséquilibre de référence et la valeur instantanée du paramètre caractéristique de la position du groupe de régulation dans le cœur, constituant un couple de valeurs des paramètres de réglage,

dans le cas où les moyens de borication et les moyens de dilution sont initialement à l'arrêt, on déclenche la mise en service des moyens de borication ou des moyens de dilution, si le couple de valeurs des paramètres de réglage correspond à un domaine de fonctionnement des moyens de borication ou des moyens de dilution, respectivement, et l'on maintient ces moyens à l'arrêt si le couple de valeurs ne correspond pas à un domaine de fonctionnement,

et dans le cas où les moyens de borication ou les moyens de dilution sont initialement en fonctionnement, on maintient le fonctionnement de ces moyens tant que le couple de valeurs des paramètres de réglage correspond à un domaine de fonctionnement de ces moyens de borication ou de dilution.

Afin de bien faire comprendre l'invention, on va maintenant décrire à titre d'exemple non limitatif un mode de mise en œuvre du procédé suivant l'invention dans le cas d'un réacteur nucléaire à eau sous pression comportant des moyens de pilotage tels que décrits dans le brevet français 2 395 572.

La figure 1 est un diagramme simplifié montrant les domaines de borication et de dilution où les paramètres de réglage ont été portés sur deux axes perpendiculaires.

La figure 2 est un diagramme plus précis que le diagramme de la figure 1 montrant les zones de borication et de dilution en fonction des deux paramètres de réglage.

Les figures 3a, 3b, 3c, 3d et 3e sont des diagrammes montrant l'évolution de divers paramètres en fonction du temps au cours d'un fonctionnement du réacteur avec une variation de la puissance demandée.

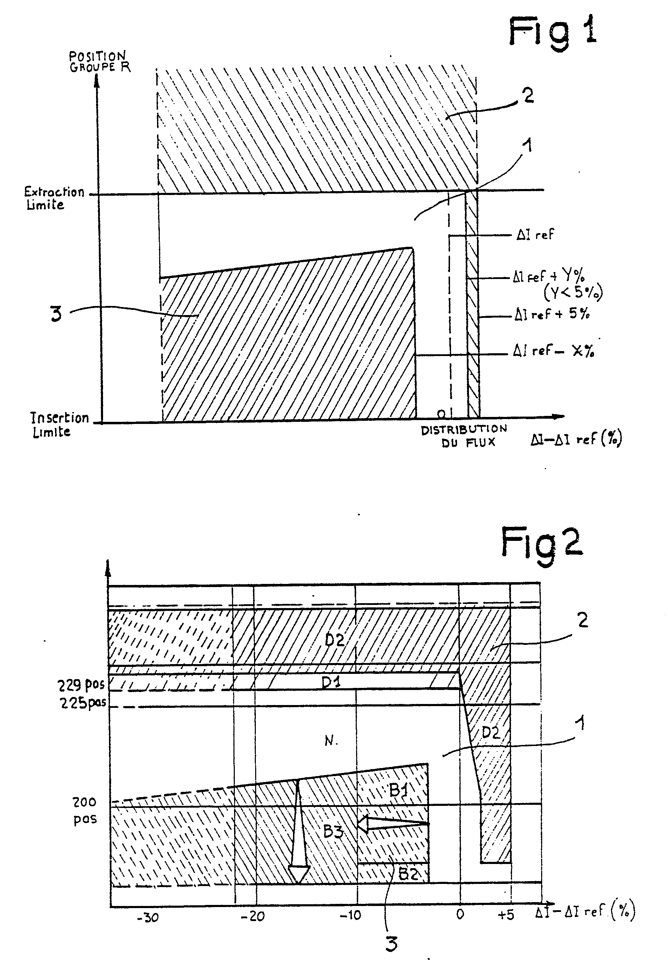

La figure 1 est un diagramme donnant la forme des domaines correspondant à la borication et à la dilution en fonction de l'écart entre le déséquilibre axial de puissance et le déséquilibre axial de référence dans le cœur d'un réacteur nucléaire et de la position d'un groupe de régulation composé de barres de commande très absorbantes.

Le mode de pilotage du réacteur est celui décrit dans le brevet français FR-A-2 395 572. On utilise un premier ensemble de groupes de barres de commande allégées en anti-réactivité qui est déplacé en fonction de la puissance demandée par la turbine au réacteur nucléaire et uniquement en fonction de cette puissance.

Un groupe de régulation R distinct des groupes précédents et constitué par des barres très absorbantes est également déplacé dans le cœur du réacteur pour effectuer la régulation de température de celui-ci. Ce groupe de régulation R est déplacé en fonction de l'écart entre la température moyenne réelle du cœur et une température de référence qui est une fonction linéaire de la puissance demandée par la turbine.

La température moyenne réelle du cœur est déterminée à partir de la mesure de la température de l'eau du circuit primaire dans la branche chaude et dans la branche froide de ce circuit. Le groupe de régulation R n'est effectivement déplacé dans un sens ou dans un autre que si la différence $\Delta T$ entre la température réelle et la température de référence dépasse en valeur absolue une certaine valeur correspondant à la demi-largeur de la bande morte de déplacement du groupe de régulation.

Sur le diagramme de la figure 1, on a représenté les positions du groupe R correspondant à l'insertion maximum de ce groupe dans le cœur et à son extraction maximum, c'est-à-dire à la position la plus basse et à la position la plus haute du groupe de régulation. Le paramètre représentant la position du groupe R a été porté en ordonnée et le second paramètre de réglage à savoir l'écart entre le déséquilibre axial de puissance et le déséquilibre axial de référence a été porté en abscisse.

Le paramètre caractéristique de la position du groupe R a été choisi comme le nombre de pas à effectuer dans le sens de l'extraction pour amener le groupe dans sa position, à partir de la position d'insertion maximum.

La figure 1 montre de façon très schématique comment sont déterminées les zones de borication et de dilution séparées par une zone neutre qui correspond à la zone de manœuvre du groupe R sans intervention des moyens de borication ou de dilution. Cette zone de manœuvre comporte deux parties distinctes suivant la valeur de l'écart du déséquilibre axial de puissance par rapport au déséquilibre de référence. Autour de la position zéro sur l'axe des abscisses, c'est-à-dire de la position correspondant à $\Delta I = \Delta I$ réf, la zone de manœuvre du groupe R n'est limitée que par la limite d'insertion à sa partie inférieure et par la limite d'extraction à sa partie supérieure. Cette zone a une largeur Y (en % qui est l'unité portée sur l'axe des abscisses) à droite de la verticale $\Delta I - \Delta I$ réf = 0 et une largeur X (toujours en %) à gauche de la verticale $\Delta I - \Delta I$ réf = 0.

X et Y sont déterminées en fonction des conditions de conduite du réacteur nucléaire. Ces valeurs sont choisies en particulier de façon à pouvoir contrôler l'écart du déséquilibre axial de puissance par rapport au déséquilibre de référence de façon suffisamment stricte, en évitant de recourir de façon trop fréquente au système de borication et de dilution, en particulier lors de mouvements de va-et-vient des groupes de régulation de puissance (appelés groupes gris) et du groupe de régulation de température ou groupe R.

Nous verrons quelles valeurs ont été choisies pour X et Y dans le cas du mode de réalisation particulier décrit en se référant à la figure 2.

Dans tous les cas, Y sera choisi inférieur à 5 %.

Lorsque le déséquilibre axial de puissance $\Delta I$ est inférieur à $\Delta I$ réf — X %, le groupe de régulation R n'est autorisé à se déplacer que dans le haut du cœur, entre sa position d'extraction limite et une position inférieure telle que la zone de manœuvre s'élargisse lorsque $\Delta I$ s'éloigne de $\Delta I$ réf.

La limitation de la zone de manœuvre du groupe R permet d'éviter d'accroître le déséquilibre axial de puissance par insertion de forte amplitude de barres très absorbantes dans le cœur. L'efficacité du système est d'autant meilleur que la zone neutre est plus étroite. Cette zone neutre doit cependant être suffisamment large pour éviter l'utilisation successive à des intervalles de temps rapprochés du système de dilution et du système de borication, par franchissement des limites de la zone neutre.

On choisira une valeur pour la largeur de la zone neutre qui est fonction de l'efficacité du système de borication et de dilution et du groupe de régulation R.

L'efficacité du groupe R dans le haut du cœur dépend fortement de la valeur du déséquilibre axial de puissance et diminue lorsque l'écart du déséquilibre axial de puissance par rapport au déséquilibre de référence devient fortement négatif. C'est la raison pour laquelle la zone neutre doit être d'autant plus large que Δl — Δl réf est plus fortement négatif.

On donnera les valeurs retenues pour la largeur de la zone neutre dans le mode d'application particulier qui sera décrit en se référant à la figure 2.

De part et d'autre de la zone neutre 1, on définit une zone de dilution 2 et une zone de borication 3 limitées à droite et à gauche par deux droites parallèles à l'axe des ordonnées dont les abscisses dépendent du niveau de puissance du réacteur.

Ces écarts limites par rapport au déséquilibre axial de référence sont donnés par le trapèze de fonctionnement du réacteur, en fonction du niveau de puissance, c'est-à-dire par les limites de fonctionnement du réacteur.

Dans la pratique, la limite droite de la zone de dilution 2 n'est jamais très éloignée de Δl — Δl réf = 5 %.

Lors du fonctionnement d'un réacteur nucléaire à eau sous pression tel que décrit dans le FR-A-2 395 572, les groupes de régulation de puissance ou groupes gris ont une position qui dépend uniquement du niveau de puissance demandé au réacteur. A ce niveau de puissance correspond une température de référence qui est comparée à la température moyenne réelle du cœur déterminée à partir des mesures de température dans la branche chaude et dans la branche froide du circuit primaire. La différence ΔT entre la température moyenne et la température de référence permet de déplacer le groupe de régulation R si ΔT est supérieur à la largeur de la bande morte de ce groupe R.

L'action automatique sur les moyens de dilution ou de borication résulte de la comparaison du couple de valeurs correspondant à la position extraite du groupe R et à l'écart de déséquilibre axial de puissance avec les couples de valeurs correspondant à chacune des zones 1, 2 et 3 représentées sur la figure 1 et correspondant respectivement à la zone neutre, la zone de dilution et la zone de borication.

Il est équivalent de dire qu'on recherche la position du point de fonctionnement défini par les paramètres de réglage (position du groupe R et écart du déséquilibre axial de puissance) par rapport aux zones 1, 2 et 3 du diagramme de la figure 1.

La commande des moyens de dilution ou de borication se fait donc indépendamment de la commande du groupe de régulation R.

La présence du point de fonctionnement dans la zone neutre 1 entraîne un arrêt des moyens de dilution ou de borication si les uns ou les autres de ces moyens étaient en fonctionnement précédemment. Ceci correspond à un passage du point de fonctionnement de la zone 2 ou de la zone 3 à la zone 1. Si les moyens de borication ou de dilution n'étaient pas en fonctionnement, ces moyens restent à l'arrêt et ceci correspond à un maintien du point de fonctionnement dans la zone 1.

La présence du point de fonctionnement dans la zone de dilution 2 entraîne une mise en fonctionnement de ces moyens de dilution s'ils étaient à l'arrêt initialement. Ceci correspond à un passage du point de fonctionnement de la zone 1 à la zone 2.

De même, dans le cas d'un passage du point de fonctionnement de la zone 1 à la zone 3, les moyens de borication sont mis en fonctionnement.

Le passage du point de fonctionnement d'une zone à une autre peut correspondre à une arrivée du groupe R à une de ses limites de déplacement effectives, si la position du groupe R définissant l'un des deux paramètres de réglage est la position réelle instantanée du groupe R.

Ceci correspond à un mode de commande des moyens de dilution et de borication assez proche de ce qui est décrit dans le FR-A 2 395 572 avec, cependant, une nouvelle définition de la zone de manœuvre du groupe R en fonction d'un nouveau paramètre pris en compte, à savoir l'écart du déséquilibre axial de puissance par rapport au déséquilibre axial de référence.

On effectue une mesure du déséquilibre axial de puissance par des mesures neutroniques à différentes hauteurs dans le cœur et l'on calcule l'écart de ce déséquilibre axial par rapport au déséquilibre de référence.

Dans le cas où le second paramètre de réglage, à savoir la position du groupe de régulation R dans le cœur, correspond non plus à la valeur réelle instantanée de l'extraction du groupe R mais à une valeur fictive déterminée en ajoutant au signal de position du groupe R un signal proportionnel à la différence de température ΔT, la borication ou la dilution peuvent être déclenchées indépendamment de l'arrivée du groupe R à l'une de ses bornes de déplacement.

En effet, puisqu'à chaque signal de température ΔT on peut faire correspondre un déplacement du groupe R par un certain facteur de proportionnalité, on peut calculer la position du groupe R voulue pour effectuer la correction de température. En prenant en compte cette position fictive du groupe R comme valeur de l'un des deux paramètres de réglage, on peut déclencher une action de dilution ou de borication (ou un arrêt de la dilution ou un arrêt de la borication) préalablement et indépendamment de tout mouvement du groupe R.

Ceci est vrai en particulier si le groupe R est très proche d'une de ses bornes de déplacement et si le signal d'erreur de température reste dans la bande morte du groupe R.

La largeur de la bande morte du groupe R correspond généralement à un écart de température de 0,83 °C correspondant, avec le système de régulation utilisé par la demanderesse, à un déplacement de 4 pas du groupe de régulation R. Si nous supposons un signal d'erreur de température de 0,3° et une position initiale du groupe de contrôle R à un pas au-dessus de la zone de borication, la position fictive du groupe R à 4 ×

0,3/0,83 = 1,4 pas en dessous de la position réelle initiale est à l'intérieur de la zone de borication. On déclenche donc les moyens de borication sans qu'il y ait mouvement du groupe R, ce qui a pour effet de refroidir le fluide primaire et d'éviter un mouvement ultérieur du groupe R vers la zone de borication suivi d'un retour du groupe R vers la zone neutre.

On voit ainsi l'intérêt de l'utilisation des valeurs fictives de la position du groupe R qui permet une anticipation des actions de borication ou de dilution.

En ce qui concerne la limite supérieure de la zone neutre correspondant à la limite inférieure de la zone de dilution, celle-ci est fixée à quelques pas de déplacement au-dessus du haut du cœur. La hauteur de la zone neutre au-dessus du haut du cœur sera par exemple choisie égale à 4 pas de déplacement du groupe R correspondant à un $\Delta$ T de 0,83 °C.

Le déplacement du point de fonctionnement dans cette zone ne correspond donc pas à un déplacement réel du groupe R mais à une variation de la température moyenne de fluide primaire au-dessous de la température de référence. On est donc amené à tolérer un refroidissement maximum du cœur équivalent à la largeur de la bande morte de température.

Au-delà de cette limite, on agit comme si le groupe R était situé dans la zone de dilution et l'on déclenche les moyens de dilution qui provoquent une augmentation de réactivité du cœur et un réchauffement de celui-ci pour ramener sa valeur à la température de référence.

On opère ainsi une correction de température sans déplacement du groupe de régulation R.

On voit donc que le procédé suivant l'invention permet d'agir par anticipation et d'éviter des mouvements du groupe de régulation R.

Sur la figure 2, on voit un diagramme représentant les zones de dilution et de borication en fonction des deux paramètres de réglage représentés de façon plus précise et dans un mode de réalisation particulier, en ce qui concerne les valeurs retenues pour les limites de zones.

C'est ainsi que la zone neutre a une largeur égale à 2 % à droite de la verticale $\Delta l - \Delta l$ réf = 0 et de 3 % à gauche de cette verticale.

Pour les valeurs de $\Delta l$ inférieur à $\Delta l$ réf — 3 %, la zone neutre a une largeur allant de 15 pas de déplacement du groupe R pour $\Delta l = \Delta l$ réf — 3 % à 20 pas pour $\Delta l = \Delta l$ réf — 20 %.

Cette largeur représente en réalité le déplacement du groupe R jusqu'en haut du cœur qui ne correspond pas réellement à la limite supérieure de la zone neutre et à la limite inférieure de la zone de dilution qui se trouve 4 pas au-dessus du haut du cœur. Ceci correspond à un refroidissement possible de la température moyenne du cœur de 0,83 °C.

La limite droite de la zone de dilution correspond à $\Delta l = \Delta l$ réf + 5 %.

La limite gauche des zones de dilution et de borication est variable en fonction de la puissance. La limite de la zone de dilution à droite de

la verticale $\Delta l - \Delta l$ réf = 0 est inclinée par rapport à la verticale pour tenir compte de l'effet du groupe R dans le haut du cœur.

On voit sur la figure 2 que les zones de dilution 2 et de borication 3 sont elles-mêmes divisées en zones D1, D2 et B1, B2, B3 respectivement.

Dans la zone D1, la dilution par introduction d'eau pure dans le circuit primaire du réacteur est modulée en fonction de l'écart du point de fonctionnement par rapport à la limite haute de la zone neutre correspondant à l'horizontale 229 pas. L'injection d'eau pure se fait donc avec un débit croissant depuis la valeur 0 jusqu'à sa valeur maximum, suivant que le point de fonctionnement se trouve à la limite inférieure ou à la limite supérieure de la zone D1.

Une telle modulation permet d'adapter l'effet de la dilution à ce qui est nécessaire pour maintenir la température du réacteur au-dessus d'une limite peu éloignée de la température de référence, en tenant compte de l'effet du xénon accompagnant les variations de réactivité.

Dans toute la zone D2, la dilution se fait avec le débit maximum pour maintenir la température du cœur et le déséquilibre axial de puissance à des valeurs convenables.

En ce qui concerne la borication, son action de régulation de la température en même temps que de maintien de la distribution axiale au plus près de sa valeur de référence doit permettre une production d'effluents plus faible ou au plus équivalente à ceux produits dans le cas d'une commande manuelle des moyens de borication et de dilution.

La limite de borication a été fixée à une valeur égale à $\Delta l$ réf — 3 %, en ce qui concerne le déséquilibre axial de puissance.

De plus, dans la zone B1 à l'intérieur de la zone de borication 3, on temporise le déclenchement de la borication en fonction de l'écart entre le déséquilibre axial mesuré $\Delta l$ et la valeur $\Delta l$ réf — 3 % et du temps cumulé de dépassement. On utilise pour cela un régulateur à action proportionnelle et intégrale qui permet de ne déclencher l'action de borication que si les perturbations du déséquilibre axial de puissance se prolongent au-delà du temps habituel des perturbations moyennes. Si l'écart entre le $\Delta l$ mesuré et $\Delta l$ réf — 3 % a une valeur supérieure à une valeur de seuil fournie au régulateur, la borication est immédiate.

Ce dispositif permet d'éviter des actions de borication intempestives tout en prenant en compte l'effet du xénon accompagnant certaines perturbations du déséquilibre axial de puissance.

Pour résoudre les problèmes relatifs à l'inertie des moyens de borication et de dilution qui ne permettent pas de contrôler finement la concentration en bore du circuit primaire, on a mis au point d'autre part une technique d'injection d'acide borique par doses déterminées de façon précise.

Le volume de chaque dose est fonction du signal d'erreur de température $\Delta T$. Cette fonction est réactualisée en fonction de l'épuisement du combustible. L'intervalle entre l'injection de deux doses est choisi de manière que la dose précédente ait terminé sont effet avant d'autoriser une deuxième injection.

Pour augmenter la vitesse de borication, on diminue l'intervalle entre deux injections de dose unitaire d'acide borique.

Pour obtenir une borication plus efficace et plus rapide on diminuera donc l'intervalle entre l'envoi de deux doses successives d'acide borique. La borication doit être d'autant plus rapide que le point de fonctionnement traduisant la position du groupe R est plus éloigné de la limite inférieure de la zone neutre, c'est-à-dire de la limite supérieure de la zone de borication. L'intervalle entre deux doses sera donc une fonction monotone décroissante de l'écart de la position du groupe R par rapport à la limite inférieure de la zone neutre.

Une borication rapide a pour conséquence une extraction rapide du groupe de régulation R et donc un déplacement rapide du déséquilibre axial de puissance $\Delta I$ vers les valeurs positives si bien qu'il est nécessaire de limiter cette évolution du $\Delta I$ d'autant plus qu'on se rapproche de la limite droite $\Delta I$ réf — 3 % de la zone de borication. L'intervalle entre l'injection de deux doses successives sera donc aussi une fonction monotone décroissante de l'écart entre le $\Delta I$ mesuré et la limite $\Delta I$ réf — 3 %.

Le plus grand des deux intervalles déterminé en fonction de la distance du groupe R par rapport à la limite inférieure de la zone neutre et en fonction de l'intervalle du $\Delta I$ par rapport au $\Delta I$ réf. — 3 % respectivement est utilisé pour la régulation des moyens de borication.

Dans la zone B1, la borication est donc temporisée par un régulateur proportionnel intégral en fonction de l'écart $\Delta I$ — ($\Delta I$ réf — 3 %). L'intervalle entre les doses d'acide borique injectées dans le fluide primaire est fonction de l'un ou l'autre des deux paramètres :

écart $\Delta I$ — ($\Delta I$ réf — 3 %),

écart de la position du groupe R par rapport à la limite inférieure de la zone neutre.

Dans la zone B2, la borication est immédiate mais l'intervalle entre les injections de deux doses successives est toujours fonction de l'un ou l'autre des deux paramètres précédents.

Dans la zone B3, la borication est immédiate et l'intervalle entre les doses est fonction seulement de l'écart du signal de position du groupe R par rapport à la limite inférieure de la zone neutre.

On a figuré par des flèches dans les zones B1 et B3 le sens d'accroissement du débit de borication en fonction de la valeur du déséquilibre axial de puissance et de la position du groupe R par rapport à la limite inférieure de la zone neutre respectivement.

La dilution peut se faire par un débit d'eau pure modulé ou par doses successives d'eau pure injectée à débit constant.

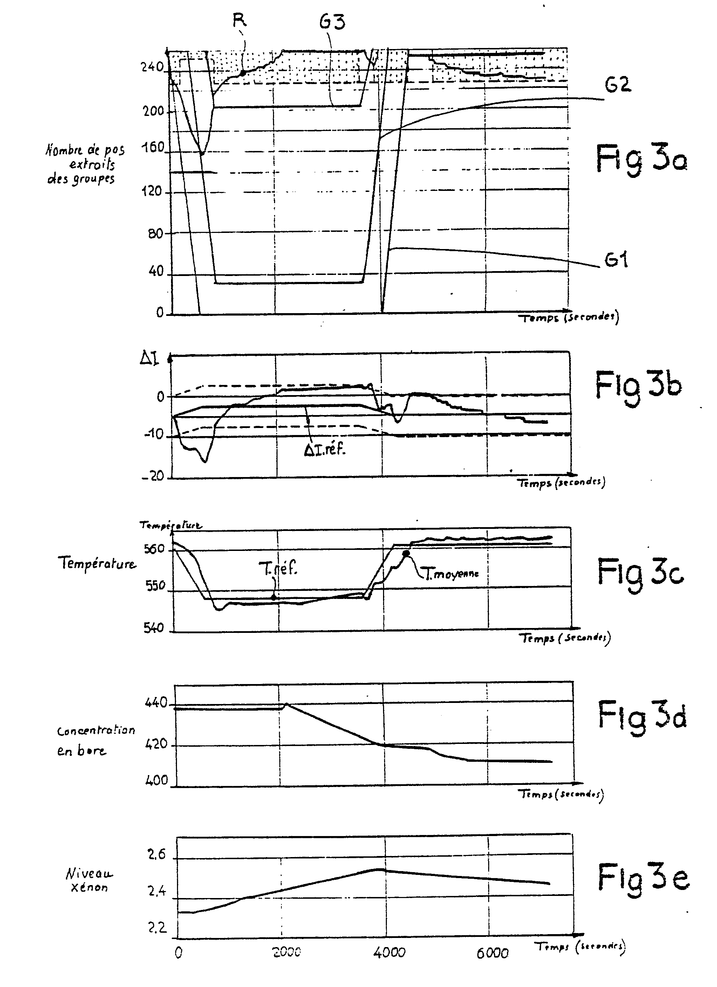

Sur les figures 3a à 3e, on voit l'évolution de différents paramètres au cours du temps, dans le cas du fonctionnement d'un réacteur nucléaire sur lequel on réalise une baisse rapide de la puissance, à 5 % par minute, depuis 100 % jusqu'à 50 % de la puissance nominale, puis une stabilisation de la puissance à 50 % de la puissance nominale pendant une heure et enfin une reprise rapide de charge à 5 % par minute avec stabilisation à 100 % de la puissance nominale.

Sur la figure 3a on a représenté les déplacements des groupes de barres de commande, dans un diagramme donnant le nombre de pas extraits des groupes absorbants en fonction du temps.

On utilise trois groupes de régulation de puissance allégés en anti-réactivité appelés « groupes gris » ou « groupes G » et un groupe de régulation constitué par des barres très absorbantes appelé « groupe R ». On a également représenté sur le diagramme de la figure 3a la bande de manœuvre du groupe R dans le haut du cœur.

Sur la figure 3b on a représenté l'évolution du déséquilibre axial de puissance par rapport au déséquilibre axial de référence et par rapport à une bande de largeur plus ou moins 5 % autour du $\Delta I$ de référence.

Sur la figure 3c on a représenté l'évolution de la température moyenne du cœur comparativement à l'évolution de la température de référence qui est fonction du niveau de puissance du réacteur.

Sur figure 3d on a représenté l'évolution de la concentration en bore et sur la figure 3e la concentration du xénon, en fonction du temps.

La zone neutre ou zone de manœuvre du groupe R a été déterminée de la façon suivante : sa largeur autour du déséquilibre axial de référence est de 5 % de part et d'autre et son amplitude pour $\Delta I = \Delta I$ réf — 5 % est de dix pas.

Pour obtenir une baisse de puissance du réacteur de 100 % de la puissance nominale à 50 % de cette puissance nominale, on insère les groupes gris G1, G2, G3 successivement dans le cœur du réacteur jusqu'à une position déterminée par la valeur de la puissance demandée.

L'efficacité relativement faible des groupes gris allégés en anti-réactivité entraîne un déplacement du groupe R en insertion au-delà de la zone neutre. Le déséquilibre axial de puissance $\Delta I$ diminue fortement pour prendre une valeur inférieure à $\Delta I$ réf — 5 %. La largeur de la bande de manœuvre du groupe R est alors de 10 pas.

Le déplacement du groupe R en insertion commandé par la décroissance de la température de référence entraîne le point de fonctionnement très en dessous de la limite inférieure de la zone neutre dans la zone de borication.

On n'opère cependant aucune borication, comme il est visible sur la figure 3d, un blocage des moyens de borication étant intervenu.

En effet, dans le cas d'un fonctionnement en transitoire rapide tel que l'acquisition d'un nouvel échelon de puissance, un îlotage ou une rampe quelconque de montée ou de descente de puissance supérieure à 2 ou 3 % par minute, le groupe de régulation R se déplace en insertion ou en extraction, dans le même sens que les groupes gris, jusqu'au moment où la température de référence se stabilise à son nouveau palier. Le groupe de régulation revient ensuite vers sa bande de manœuvre par le mouvement inverse. Le point de fonctionnement dont les coordonnées correspondent à la position du groupe R et au déséquilibre axial de puissance est amené à se déplacer soit dans la zone de borication soit dans la zone de dilution. Si une borication ou une dilution effective était alors effectuée, cette action irait dans la majorité des cas dans un sens aggravant l'effet de réactivité résultant de la variation de la concentration du xénon qui accompagne la variation de réactivité.

On est donc amené à bloquer l'action de borication ou de dilution pendant le mouvement des groupes gris de commande de puissance lors d'une phase transitoire rapide. On considère qu'une phase de fonctionnement transitoire est rapide si l'écart entre la position demandée et la position mesurée des groupes gris dépasse un certain seuil. En cas de dépassement de ce seuil, un signal commande le blocage de borication et de la dilution.

Généralement, lorsque les groupes gris sont arrivés à la position demandée, par exemple la position en insertion représentée à la figure 3a, le groupe R n'est pas encore revenu dans sa bande de manœuvre. La position du point de fonctionnement commanderait alors une borication dans le cas de fonctionnement représenté sur les figures 3a à 3e. Cette action n'est pas souhaitable puisque le groupe R poursuit son extraction pour revenir dans sa bande de manœuvre, les barres grises étant immobiles et la puissance à son nouveau palier.

On introduit donc un second blocage du système de borication qui est activé par un signal émis lorsque le groupe de régulation R se déplace vers la zone neutre. Ce blocage est également maintenu pendant les trente secondes qui suivent l'arrêt du groupe de régulation R même si ce groupe n'a pas encore rejoint la zone neutre.

En réalité, l'action de borication (ou de dilution) est bloquée si le groupe R se déplace rapidement, ce qui est le cas pour une phase de fonctionnement en transitoire rapide. En revanche, l'action de borication (ou de dilution) est autorisée si l'intervalle de temps entre deux pas de déplacement du groupe de régulation R est supérieur à trente secondes. En effet, dans ce cas, on considère que le nouvel équilibre du groupe R est atteint et l'on déclenche une action de borication (ou de dilution) pour ramener le groupe de régulation dans la zone neutre.

On voit donc que ces blocages, dans le cas d'un transitoire rapide, comme représenté sur les figures 3, permettent d'éviter des actions intempestives des moyens de borication ou des moyens de dilution.

On voit sur la figure 3d que la concentration en bore du fluide primaire reste constante pendant les déplacements des groupes gris et pendant le retour du groupe de régulation R vers sa bande de manœuvre.

Le groupe de régulation R continue à se déplacer dans le sens de l'extraction jusqu'au moment où il atteint la limite supérieure de la zone neutre.

Il n'y a plus alors de blocage des moyens de dilution et de borication, puisque les groupes gris sont à l'arrêt et que le groupe R est revenu dans sa bande de manœuvre. Le déplacement du point de fonctionnement au-delà de la limite supérieure de la zone neutre, c'est-à-dire dans la zone de dilution, commande un déclenchement effectif des moyens de dilution par injection d'eau pure.

L'écart du déséquilibre axial de puissance par rapport au déséquilibre axial de référence est alors positif et l'on se trouve dans la zone D2 du diagramme où la dilution est effectuée à son débit maximum. Cette dilution permet de maintenir la température moyenne du cœur au voisinage de la température de référence et le déséquilibre axial de puissance au voisinage de sa limite supérieure permise égale à $\Delta I$ réf $+ 5$ %.

L'extraction des groupes gris à la fin du palier de puissance, entraîne une remontée de la température de référence et une décroissance du déséquilibre axial de puissance qui revient à la valeur du déséquilibre axial de référence. Le point de fonctionnement arrive alors dans la zone D1 du diagramme ce qui entraîne une modulation du débit de dilution en fonction de l'écart du point de fonctionnement par rapport à la limite haute de la zone neutre. Le débit d'injection est alors réduit puisque le point de fonctionnement est à proximité de la limite de la zone neutre.

Cette dilution à débit réduit se poursuivra jusqu'au moment où le point de fonctionnement revient dans la zone D2. L'injection à débit maximum est de nouveau utilisée avant la stabilisation finale, le groupe R se stabilisant au voisinage de la partie centrale de la zone neutre.

La figure 3e montre que la concentration du xénon est restée relativement stable pendant tout le transitoire.

On voit donc que les principaux avantages du procédé suivant l'invention sont de permettre d'effectuer de façon totalement automatique toutes les opérations de dilution et de borication, en tenant compte de la position et des déplacements du groupe de régulation R et de la valeur du déséquilibre axial de puissance. La régulation de température est effectuée de façon automatique par le déplacement du groupe R assisté par les moyens de borication et de dilution. L'évolution du xénon est également parfaitement contrôlée même dans les transitoires rapides.

Enfin, la commande automatique permet une action anticipée des moyens de borication ou de dilution, indépendamment de tout mouvement du groupe de régulation de température.

L'invention ne se limite pas aux modes de réalisation qui ont été décrits ; elle en comporte au contraire toutes les variantes dans le cadre des revendications.

C'est ainsi que le procédé suivant l'invention s'applique non seulement dans le cas d'un mode de conduite utilisant des groupes gris allégés en anti-réactivité et un groupe de régulation très absorbant, appelé mode G, mais encore dans le cas où l'on n'utilise que des groupes fortement absorbants, par exemple dans le mode de conduite appelé mode A.

La définition des limites de la zone neutre, de la zone de dilution et de la zone de borication dépend des conditions de fonctionnement du réacteur et des normes de sécurité admises. Les valeurs numériques données dans les exemples ne sont donc nullement limitatives. Les limites des domaines de borication et de dilution pourront être facilement déduites du trapèze de fonctionnement du réacteur définissant les limites de fonctionnement de celui-ci.

Les moyens de dilution et de borication pourront être commandés de façon à agir de manière anticipée, en ajoutant au signal de position du groupe de régulation de température un signal proportionnel à l'écart entre la température moyenne du cœur et la température de référence. Dans certains cas cependant, on utilisera toujours le signal correspondant à la position réelle du groupe R. Ce sera toujours le cas en particulier lors d'un fonctionnement du réacteur en téléréglage ou pour le réglage de fréquence.

La commande automatique des moyens de borication et des moyens de dilution pourra être effectuée par tout moyen connu de l'homme de l'art permettant de comparer des signaux avec des valeurs prédéterminées définissant des plages de fonctionnement des moyens de borication ou de dilution. On pourra effectuer une visualisation de la position du point de fonctionnement par rapport à la zone neutre et aux zones de borication et de dilution.

Enfin, l'invention s'applique dans tous les cas où un réacteur nucléaire à eau sous pression utilise un groupe de régulation de température constitué par des barres de matériau absorbant et une modification de la teneur en bore soluble de l'eau sous pression, pour la conduite du réacteur.

**Revendications**

1. Procédé de réglage automatique de la teneur en bore soluble de l'eau de refroidissement d'un réacteur nucléaire à eau sous pression dont la conduite est assurée par le déplacement, dans la direction verticale, de barres de commande absorbant les neutrons dans le cœur du réacteur constitué par des assemblages disposés verticalement et côte à côte et par le réglage de la teneur en bore soluble de l'eau sous pression grâce à des moyens de borication et à des moyens de dilution de cette eau, les barres de commande comportant au moins un groupe de régulation constitué par des barres fortement absorbantes qui sont déplacées automatiquement en fonction de l'écart entre le température moyenne du cœur et une température de référence fonction de la puissance que doit fournir le réacteur et des moyens étant associés au réacteur pour la détermination du déséquilibre axial de puissance dans le cœur et de l'écart de ce déséquilibre axial par rapport à un déséquilibre de référence correspondant à l'insertion minimum des barres de

commande dans le cœur et à l'équilibre de la concentration en xénon, caractérisé par le fait :

qu'on définit à priori des domaines de fonctionnement des moyens de borication et des moyens de dilution respectivement, correspondant à des couples de valeurs de deux paramètres de réglage, à savoir un paramètre caractéristique de la position du groupe de régulation dans le cœur et l'écart du déséquilibre axial de puissance par rapport au déséquilibre de référence, en tenant compte des conditions d'exploitation du réacteur et des normes de sécurité,

et que de façon continue, pendant le fonctionnement du réacteur :

on détermine la valeur instantanée de l'écart du déséquilibre axial de puissance par rapport au déséquilibre de référence et la valeur instantanée du paramètre caractéristique de la position du groupe de régulation dans le cœur du réacteur constituant un couple de valeurs des paramètres de réglage,

dans le cas où les moyens de borication et les moyens de dilution sont initialement à l'arrêt, on déclenche la mise en service des moyens de borication ou des moyens de dilution, si le couple de valeurs des paramètres de réglage correspond à un domaine de fonctionnement des moyens de borication ou des moyens de dilution, respectivement, et l'on maintient ces moyens à l'arrêt si le couple de valeurs ne correspond pas à un domaine de fonctionnement,

et dans le cas où les moyens de borication ou les moyens de dilution sont initialement en fonctionnement, on maintient le fonctionnement de ces moyens tant que le couple de valeurs des paramètres de réglage correspond à un domaine de fonctionnement de ces moyens de borication ou de dilution.

2. Procédé de réglage automatique suivant la revendication 1, caractérisé par le fait que le paramètre caractéristique de la position du groupe de régulation dans le cœur correspond à une position fictive du groupe de régulation tenant compte du déplacement du groupe de régulation demandé en fonction de l'écart entre la température moyenne du cœur et la température de référence, les moyens de borication et de dilution agissant ainsi de façon anticipée.

3. Procédé de réglage automatique suivant l'une quelconque des revendications 1 et 2, caractérisé par le fait que la zone de dilution (2) comporte deux parties, à savoir une zone (D1) dans laquelle les moyens de dilution sont commandés de façon à avoir une action modulée en fonction de l'écart du point de fonctionnement représentant les paramètres de réglage, par rapport à la limite inférieure du domaine de dilution, si l'on considère un déplacement du groupe de régulation dans le sens de l'extraction, et une seconde zone (D2) où la dilution est réalisée avec un débit maximum, lorsque le point de fonctionnement s'y trouve.

4. Procédé de réglage automatique suivant l'une quelconque des revendications 1, 2 et 3, caractérisé par le fait que le domaine de borication est divisé en trois parties, à savoir une zone (B1) où la borication peut être différée dans le temps en fonction de la valeur du déséquilibre axial de puissance et où le débit de borication dépend du déséquilibre axial de puissance et de la position du groupe de régulation par rapport à la limite supérieure de la zone de borication, une zone où la borication est immédiate et où la vitesse de borication dépend du déséquilibre axial de puissance et de la position du groupe de régulation par rapport à la limite supérieur de la zone de borication et enfin une zone (B3) où la borication est immédiate et où le débit de borication ne dépend que de la position du groupe de régulation par rapport à la limite supérieure de la zone de borication.

5. Procédé de réglage automatique suivant la revendication 4, caractérisé par le fait que les moyens de borication sont constitués par un dispositif d'injection par doses d'eau boriquée, chaque dose ayant un volume qui est fonction de l'écart de température entre la température moyenne du cœur et la température de référence et l'intervalle de temps entre l'injection de deux doses successives étant modulé pour faire varier la vitesse de borication.

6. Procédé de réglage automatique suivant l'une quelconque des revendications 1, 2, 3, 4 et 5, dans le cas où la conduite du réacteur est effectuée avec un ensemble de groupes de commande de puissance allégés en anti-réactivité et par un groupe de régulation de température très absorbant, caractérisé par le fait qu'on réalise un blocage des moyens de dilution et de borication dans le cas où l'écart entre la position réelle instantanée des groupes de régulation de puissance et la position demandée de ces groupes de régulation de puissance dépasse un certain seuil.

7. Procédé de réglage automatique suivant la revendication 6, caractérisé par le fait qu'on réalise un blocage de moyens de dilution et de borication, lorsque le groupe de régulation de température très absorbant est entraîné en dehors de sa bande de manœuvres, lors d'une modification rapide de puissance et lorsque ce groupe de régulation revient vers sa bande de manœuvre, lorsque la puissance du réacteur est stabilisée à sa nouvelle valeur après son changement rapide.

**Claims**

1. A process for automatic regulation of the content of soluble boron in the cooling water of a pressurized water nuclear reactor whose control is ensured by the vertical movement of control rods absorbing the neutrons in the core of the reactor consisting of assemblies arranged vertically and side-byside and by the regulation of the content of soluble boron in the pressirized water by virtue of means of boration and means of dilution of this water, the control rods comprising at least one regulating group consisting of highly absorbing rods which are moved automatically as a function of the deviation between the mean temperature of the core and a reference temperature which is a function of the power which the reactor has to supply and means being associated with the reactor for determining the axial offset of power in the core and the deviation of this axial offset relative to a reference axial offset corresponding to the minimum insertion of the control rods into the core and to the equilibrium of the xenon concentration, characterized by the fact that :

operating regions of the means of boration and the means of dilution respectively are determined a priori, corresponding to pairs of values of two control parameters, namely a parameter which is characteristic of the position of the regulating group in the core and the axial offset relative to the reference axial offset, taking account of the operating conditions of the reactor and the safety standards,

and that, in a continuous manner, during the operation of the reactor :

a determination is made of the momentary value of the axial offset relative to the reference axial offset and of the momentary value of the parameter which is characteristic of the position of the regulating group in the core of the reactor, forming a pair of values of the control parameters,

in the case where the means of boration and the means of dilution are initially at rest, the operation of the means of boration or the means of dilution is triggered if the pair of values of the control parameters corresponds to an operating region of the means of boration or the means of dilution, respectively, and these means are maintained at rest if the pair of values does not correspond to an operating region,

and in the case where the means of boration or the means of dilution are initially operating, the operation of these means is maintained so long as the pair of values of the control parameters corresponds to an operating region of these means of boration or of dilution.

2. The process for automatic regulation as claimed in claim 1, characterized by the fact that the parameter which is characteristic of the position of the regulating group in the core corresponds to an imaginary position of the regulating group taking account of the movement of the regulating group required as a function of the deviation between the mean temperature of the core and the reference temperature, the means of boration and of dilution acting thereby in an anticipated fashion.

3. The process for automatic regulation as claimed in either of claims 1 and 2, characterized by the fact that the dilution zone (2) comprises two parts, namely a zone (D1) in which the means of dilution are controlled so as to have a modulated action as a function of the deviation of the operating point representing the control parameters, relative to the lower limit of the dilution region, if a movement of the regulating group in the direction of withdrawal is considered, and a second zone (D2) where the dilution is carried out with a maximum flow rate, when the operating point is therein.

4. The process for automatic regulation as claimed in any one of claim 1, 2 and 3, characterized by the fact that the region of boration is devided into three parts, namely a zone (B1) where the borationn can be delayed in time as a function of the value of the axial offset and where the boration flow rate depends on the axial offset and on the position of the regulating group relative to the upper limit of the boration zone, a zone (B2) where the boration is immediate and where the rate of boration depends on the axial offset and on the position of the regulating group relative to the upper limit of the boration zone and, finally, a zone (B3) where the boration is immediate and where the boration flow rate depends only on the position of the regulating group relative to the upper limit of the boration zone.

5. The process for automatic regulation as claimed in claim 4, characterized by the fact that the means of boration consist of a device for injecting, in doses, water containing boric acid, each dose having a volume which is a function of the temperature deviation between the mean temperature of the core and the reference temperature, and the time interval between the injection of two successive doses being modulated to vary the rate of boration.

6. The process for automatic regulation as claimed in any one of claims 1, 2, 3, 4 and 5, in the case where the operation of the reactor is carried out with an assembly of power control groups having reduced anti-reactivity and by a highly absorbing group for regulating temperature, characterized by the fact that an inhibition of the means of dilution and of boration is produced in the case where the deviation between the real momentary position of the power regulating groups and the required position of these power regulating groups exceeds a certain threshold.

7. The process for automatic regulation as claimed in claim 6, characterized by the fact that an inhibition of the means of dilution and of boration is produced when the highly absorbing group for regulating temperature is driven outside its working band, during a fast change of power and while this regulating group is returning towards its working band, whilst the power of the reactor is stabilized at its new value after its fast change.

**Patentansprüche**

1. Verfahren zur automatischen Regelung des Gehalts an löslichem Bor im Kühlwasser eines Druckwasser-Kernreaktors, dessen Betrieb durch die Verschiebung von Steuerstangen in der Vertikalrichtung, die die Neutronen im Kern des Reaktors absorbieren, der durch vertikal und Seite an Seite angeordnete Einheiten gebildet ist, und durch die Regelung des Gehalts an löslichem Bor im Druckwasser mithilfe von Borierungsmitteln und Mitteln zu Verdünnung dieses Wassers gesichert wird, wobei die Steuerstangen wenigstens eine Regulierungsgruppe aufweisen, die aus stark absorbierenden Stangen besteht, die als Funktion der Abweichung der mittleren Temperatur des Kerns und einer Bezugstemperatur, die Funktion der Leistung ist, die der Reaktor liefern soll, und mit dem Reaktor Mittel zur Bestimmung des axialen Leistungsungleichgewichts im Kern und der Abweichung dieses axialen Ungleichgewichts bezüglich eines Bezugsungleichgewichts entsprechend der Minimaleinführung der Steuerstangen in den Kern und des Gleichgewichts der Xenon-Konzentration verbunden sind, dadurch gekennzeichnet, daß man vorab Betriebsbereiche der Borierungsmittel bzw. der Verdünnungsmittel entsprechend Wertepaaren zweier Regelungsparameter, nämlich eines die Lage der Regulierungsgruppe im Kern kennzeichnenden Parameters und der Abweichung des axialen Leistungsungleichgewichts vom Bezugsungleichgewicht unter Berücksichtigung der Ausnutzungsbedingungen des Reaktors und der Sicherheitsnormen definiert, und daß in kontinuierlicher Weise während des Betriebs des Reaktors :

man den Augenblickswert der Abweichung des axialen Leitstungsungleichgewichts vom Bezugsungleichgewicht und den Augenblickswert des die Lage der Regulierungsgruppe im Kern des Reaktors, die ein Wertepaar der Regelungsparameter darstellen, bestimmt,

im Fall, wo die Borierungsmittel und die Verdünnungsmittel anfangs im Ruhezustand sind, die Inbetriebsetzung der Borierungsmittel oder der Verdünnungsmittel auslöst, wenn das Wertepaar der Regelungsparameter einem Betriebsbereich der Borierungsmittel oder der Verdünnungsmittel entspricht, und diese Mittel im Ruhezustand hält, wenn das Wertepaar einem Betriebsbereich entspricht,

und im Fall, wo die Borierungsmittel oder die Verdünnungsmittel anfang in Betrieb sind, man den Betrieb dieser Mittel beibehält, solange das Wertepaar der Regelungsparameter einem Betriebsbereich dieser Borierungs- oder Verdünnungsmittel entspricht.

2. Verfahren zur automatischen Regelung nach Anspruch 1, dadurch gekennzeichnet, daß der die Lage der Regulierungsgruppe im Kern kennzeichnende Parameter einer fiktiven Lage der Regulierungsgruppe unter Berücksichtigung der Verschiebung der Regulierungsgruppe entspricht, die als Funktion der Abweichung zwischen der mittleren Temperatur des Kerns und der Bezugstemperatur benötigt wird, wobei die Borierungs- und Verdünnungsmittel so in vorweggenommener Weise wirken.

3. Verfahren zur automatischen Regelung nach irgendeinem der Ansprüche 1 und 2, dadurch gekennzeichnet, daß die Verdünnungszone (2) zwei Teile aufweist, nämlich eine Zone (D1), in der die Verdünnungsmittel derart gesteuert werden, daß sie eine Wirkung haben, die als Funktion der Abweichung des die Regelungsparameter darstellenden Betriebspunktes von der unteren Grenze des Verdünnungsbereichs moduliert wird, wenn man eine Verschiebung der Regulierungsgruppe im Sinne des Herausziehens betrachtet, und eine zweite Zone (D2), wo die Verdünnung mit einem Maximaldurchsatz vorgenommen wird, wenn sich der Betriebspunkt dort befindet.

4. Verfahren zur automatischen Regelung nach irgendeinem der Ansprüche 1, 2 und 3, dadurch gekennzeichnet, daß der Borierungsbereich in drei Teile geteilt ist, und zwar eine Zone (B1), wo die Borierung in der Zeit als Funktion des Wertes des axialen Leistungsungleichgewichts verschoben werden kann und wo der Borierungsdurchsatz vom axialen Leistungsungleichgewicht und von der Lage der Regulierungsgruppe bezüglich der oberen Grenze der Borierungszone abhängt, eine Zone (B2), wo die Borierung unmittelbar erfolgt und wo die Borierungsgeschwindigkeit vom axialen Leistungsungleichgewicht und von der Lage der Regulierungsgruppe bezüglich der oberen Grenze der Borierungszone abhängt, und schließlich eine Zone (B3), wo die Borierung unmittelbar erfolgt und wo der Borierungsdurchsatz nur von der Lage der Regulierungsgruppe bezüglich der oberen Grenze der Borierungszone abhängt.

5. Verfahren zur automatischen Regelung nach Anspruch 4, dadurch gekennzeichnet, daß die Borierungsmittel aus einer Vorrichtung zum Einspritzen borierten Wassers in abgeteilten Mengen bestehen, wobei jede abgeteilte Menge ein Volumen hat, das Funktion der Temperaturrabweichung zwischen der mittleren Temperatur des Kerns und der Bezugstemperatur ist, und wobei das Zeitintervall zwischen der Einspritzung zweier aufeinanderfolgender abgeteilter Mengen moduliert wird, um die Borierungsgeschwindigkeit variieren zu lassen.

6. Verfahren zur automatichen Regelung nach irgendeinem der Ansprüche 1, 2, 3, 4 und 5 im Fall, wo der Betrieb des Reaktors mit einem Aufbau von an Anti-Reaktivität erleichterten Leistungssteuergruppen und durch eine sehr absorbierende Temperaturregulierungsgruppe durchgeführt wird, dadurch gekennzeichnet, daß man eine Blockierung der Verdünnungs- und Borierungsmittel im Fall vornimmt, wo die Abweichung zwischen der tatsächlichen Augenblickslage der Leistungsregulierungsgruppen und der benötigten Lage dieser Leistungsregulierungsgruppen eine bestimmte Schwelle überschreitet.

7. Verfahren zur automatischen Regelung nach Anspruch 6, dadurch gekennzeichnet, daß man eine Blockierung der Verdünnungs- und Borierungsmittel vornimmt, wenn die sehr absorbierende Temperaturregulierungsgruppe zur Zeit einer raschen Leistungsänderung außerhalb ihres Betriebsbandes gebracht ist und wenn diese Regulierungsgruppe zu ihrem Betriebsband zurückkommt, nachdem die Leistung des Reaktors auf ihrem neuen Wert nach ihrer raschen Änderung stabilisiert ist.

# Fig 1

POSITION
GROUPE R

Extraction
Limite

$\Delta I\ ref$

$\Delta I\ ref + Y\%$
$(Y < 5\%)$

$\Delta I\ ref + 5\%$

$\Delta I\ ref - X\%$

Insertion
Limite

DISTRIBUTION
DU FLUX

$\Delta I - \Delta I\ ref\ (\%)$

# Fig 2

229 pos
225 pos

200
pos

D2

D1

N.

B1

B3

B2

D2

-30        -20        -10        0        +5        $\Delta I - \Delta I\ ref\ (\%)$

3

1

**0 127 498**

Fig 3a — Nombre de pos extroils des groupes (R, G3, G2, G1) — Temps (Secondes)

Fig 3b — $\Delta I$, $\Delta I.$réf. — Temps (secondes)

Fig 3c — Température, T.réf., T.moyenne — Temps (Secondes)

Fig 3d — Concentration en bore — Temps (Secondes)

Fig 3e — Niveau Xénon — Temps (secondes)

2